# EUROPEAN PATENT SPECIFICATION

(11) **EP 2 495 158 B1**
(45) Date of publication and mention of the grant of the patent: **27.08.2014**
(21) Application number: 10826152.0
(22) Date of filing: 27.10.2010
(51) Int. Cl.: B62H 5/04, B62H 5/00

(54) **FIXED POINT FOR ANTI-THEFT DEVICE FOR VEHICLES WITH TWO OR MORE WHEELS**
FESTPUNKT FÜR EINE DIEBSTAHLSICHERUNGSVORRICHTUNG FÜR ZWEI- UND MEHRRÄDRIGE FAHRZEUGE
POINT FIXE POUR DISPOSITIF ANTIVOL POUR VÉHICULES À ROUES OU PLUS

(30) Priority: 28.10.2009 ES 200930917; 26.10.2010 ES 201031567
(43) Date of publication of application: 05.09.2012
(73) Proprietor: Componentes Europeos Moto-Auto, S.l., 08110 Montcada I Reixac (Barcelona) (ES)
(72) Inventor: COLOME CALAFI, Fernando Salvador, E-08110 Montcada I Reixach (Barcelona) (ES)
(74) Representative: Morgades y Manonelles, Juan Antonio
(86) International application number: PCT/ES2010/070698
(87) International publication number: WO 2011/051532

(56) References cited:
- EP-A1- 0 628 472
- EP-A1- 0 774 404
- EP-A1- 2 014 543
- ES-A1- 2 203 281
- ES-A1- 2 203 281
- ES-U- 295 543
- FR-A1- 2 263 931
- FR-A1- 2 879 555
- JP-A- 8 301 159
- JP-A- 10 016 844
- US-A- 1 991 825
- US-A- 3 910 081
- US-A- 3 965 709

## Description

### Object of the Invention.

The invention refers to an anti-theft device arrangement as defined in the preamble of claim 1.

### State of the Art

Prior art document ES2203281 discloses an anti-theft device as disclosed in the preamble of claim 1, whereby the handlebar is secured to a fixed point provided on the vehicle chassis by mechanical means.

These prior art devices could not secure the vehicle to existing elements on the road, so that lifting and loading of the vehicle onto another vehicle such as a van, is impeded.

### State of the Art.

### Scope of the Invention:

The invention solves the prior art problems by providing an anti-theft device arrangement as in claim 1.

Further embodiments' are disclosed in the dependent claims.

### Description of the invention.

The invention comprises a fixed point on the vehicle chassis, made for instance, of a tubular welded structure, joining this fixed point to the handlebar of the vehicle by mechanical means such as a chain and its accessories.

The fixed point in turn comprises a stud bolt, a nut, a plate with drilled hole or similar or equivalent technique, both incorporated separately to the vehicle chassis, and more specifically to its tubular structure on which a small hole has been made in one of the tubes, attaching this stud bolt or nut to the hole in the tube of the tubular structure by means of welding or a similar technique.

The incorporation of a stud bolt or a nut and similar elements onto the tubular structure that comprises the chassis, is carried out in the vehicle-assembly line, by making a small circular hole in the case of the stud, or a small polygonal hole to secure the nut, and then proceeding to securing it by welding. Logically, the hole has been designed so that its presence does not affect the strength of the chassis and it can be protected by a plug.

Both the stud such and the nut project from the tubular structure a little, and more specifically from the frame, to facilitate the incorporation of the anti-theft device with all the necessary safety features.

An anti-theft device to be secured to a fixed point, comprising in one of the possible versions, a main bush, preferably cylindrical, one of the ends of which has a cavity that is also cylindrical and threaded, centred on this base, with a thread complementary to the stud bolt on the fixed point. On the other end of the bush is a second cavity, cylindrical in its lower part and truncated conical in its upper part, which receives a terminal, for securing the corresponding chain. On its side, the main bush incorporates by welding or a similar means, a fixing pivot for a supplementary chain.

The terminal is secured to the inside of the main bush by threading it in and by means of a circlip, which is inserted into the second cavity and in its cylindrical part, threading it and then the circlip is inserted in a slot on the cylindrical part of the second cavity, opening and impeding it from coming out of this cavity.

Another anti-theft device to be secured to the fixed point comprises in another of the possible versions, a main bush, preferably cylindrical in its first part, which extends in a truncated cone second part. The cylindrical end of the bush has a second cylindrical area of smaller diameter than the first and which includes inside a threaded cavity that is screwed onto a fixed point when this is a stud bolt welded to the frame of the vehicle chassis.

The main bush is secured to a second bush that is tubular in its left-hand part while its right-hand part has a cylindrical structure open at its upper end. The main bush is attached to the right-hand part and it is secured by a single setscrew to its single end, and a ring that is inserted into a slot in the cylindrical cavity of the right-hand part of this tubular structure.

On the left-hand of the second bush, which is designed with a cylindrical cavity, the retaining terminal is inserted in the end of a conventional chain, and a terminal is welded to the right-hand part, for securing a second chain.

In another of the possible embodiments, the anti-theft device to be secured to the fixed point comprises, a main bush, preferably cylindrical, from one of the ends of which emerges a stud bolt to be threaded onto the fixed point, with a nut welded to a tube of the tubular structure, the bush has a slot on its side into which a secondary bush (also cylindrical is fitted), the upper end of which has a hole, and inside a perimeter slot, in this hole a chain is fitted by one of its ends which has a corresponding terminal.

Providing new embodiments to those described and claimed in Patent Invention application no. 200930917 regarding the concept of fixed point, materialized in a bush that comprises two parts in all its embodiments; one of them, the main part, has an internally and externally machined cylindrical body, to which other components are fitted, and the upper end of this body has a head in different configurations.

The cylindrical body of the bush is attached by suitable means to the tubular structure of the two or more wheeled vehicle, and incorporates, in the different embodiments, some means to enable the immobilisation of the vehicle with other parts of the vehicle so as to avoid its manipulation and subsequent robbery, and some means to enable its immobilisation to points outside the vehicle, namely lamp posts, trees or similar elements, stopping the vehicle from being loaded onto a van lorry or similar vehicle.

The means to immobilise parts of the vehicle, consists of a conventional stub whose base is threaded and secured to the body of the bush, and on its side either a support which is threaded into one of the ends of said body the upper, whereas by the lower end is attached to the tubular structure or chassis of the vehicle, incorporating locks in some embodiments, which immobilise the different components of the bush and specifically its head, so that opening this lock will allow the separation and/or freeing of these components from the body of the bush.

Both the stub and the support on the upper end of the body of the bush are complemented with a chain, which is secured to the stub at one of its ends while the opposite end of the chain is immobilised to a point on the vehicle or a point outside the vehicle.

### Description of the drawings.

Figure 1 is a schematic perspective view of a vehicle (10) incorporating a fixed point (22) to its tubular structure (13), to which a chain (17) is fitted, which immobilises the handlebar (12) of the vehicle to the fixed point (22), and a second chain (19) attached to a fixed point (22) by means of the corresponding terminals (23-24).
Figure 2 is a partially sectioned plan view of the fixed point (22) to which an anti-theft device is fitted in one version (62), comprising a terminal, (23) that is secured to one chain (17), that joins the fixed point (22) to the handlebar (12) of the vehicle (10), and a second chain (19) that joins the fixed point (22) to the post (15) of street lamp (14), or any high post.
Figure 3 is a partially sectioned plan view according to figure 2, that shows the anti-theft device version (62), with the frame tube (20), to which the fixed point (22) is attached, and a stud (30), a terminal, (23) with its stub (26), to which in turn a second terminal is fitted, (24) with its lock, (25), and chain (19) fitted on one of its ends to the terminal, (24).
Figure 4 is a cross elevation section of an anti-theft device in version (72), through A-A' according to Figure 7.
Figure 5 is a vertical cross-section of the anti-theft device version (72), on a frame tube (20) to which a terminal is fitted (35) the stud threaded onto (78) said frame tube (20), and immobilised to said terminal, (35) with a pin (31).
Figure 6 is a detail through "C", according to figure 4.
Figure 7 is a perspective view of the anti-theft device (72).
Figure 8a is a side view of a vehicle (10), with its handlebar (12) joined to the fixed point (22) fitted to the frame tube (20) by means of a chain (52), and figure 8b is a side view detail of the chain (52) in its position when not in action.
Figure 9 is a longitudinal elevation section of a fixed point (22) through detail "a", according to Figure 10.
Figure 10 is a longitudinal section of the anti-theft device in a version (98) comprising a tubular structure (60), with a left-hand part (45) and a right-hand part (46) to which a retaining terminal is fitted (49).
Figure 11 is an elevation section of the anti-theft device in a version (63), to a fixed point (22), fitted to a frame tube (20) with the main bush (37) threaded to the stud bolt (30), secured to the tubular structure (13) with a screw (40) and a nut (85).
Figure 12 is an enlarged view of figure 11 and the anti-theft device in version (63), in which the fixed point (22) is fitted to a stud bolt (30), and this in turn (30) to the frame tube (20).
Figure 13 is a side view of a vehicle (10) with its handlebar (12) immobilised (12) by a chain (52) to a fixed point (22) on the tubular structure (30).
Figure 14 is a side view of the vehicle (10) as above, in which the chain (52) is in standby position, attached at one of its ends to a point on the frame tube (20).
Figure 15 is a perspective view of an anti-theft device in an alternative version (74) in which (74) is threaded to a stud bolt (30), forming a part of a fixed point (22), threaded to this stud (30) in a nut (28) and the nut (28) is welded to the frame (20) of a tubular structure (13).
Figure 16 is an exploded perspective view of the anti-theft device in version (74) shown in the previous figure, with the help of a fixing pivot (53), secured to the fixed point (22) by the nut (28), and the nut is attached to the frame tube (20), the fixing pivot (53) consisting of a main bush (70) and a secondary bush (71).
Figure 17 is a side elevation view of an anti-theft device in an alternative version (99), in one of the possible embodiments, joined to a fixed point (22), with a bush (86) and a plate (66).
Figure 18 is a section through C-C' according to Figure 17 of the anti-theft device in version (99).
Figure 19 is an exploded view of the anti-theft device in an alternative version (90), with all its parts.
Figure 20 is a perspective view of a material embodiment of the concept of fixed point, bush (100), in which the support (111) and the stub (105), that are part of the same are immobilised by a button lock (116) on the body (101) of said bush (100).
Figure 21 is a front elevation view of the bush (100), on the body of which (101) and on its side is the stub (105) and the securing (117).
Figure 22 is a cross elevation section through A-A', according to Figure 21 of the bush (100).
Figure 23 is a perspective of an alternative application of the concept of fixed point, whose material embodiment is the bush (100), in which the support (111) and the stub (105) are immobilised on the body (101) of (100) by the action of the screw (117).
Figure 24 is a front elevation view of an alternative application of the concept of fixed point, whose material embodiment is the bush (130), which comprises the head (131), which in turn is fitted to the upper end (126) of the body (132) and fitted to the head (118).
Figure 25 is a cross elevation section through A-A', according to Figure 24 of the bush (130.)
Figure 26 is a front elevation view of the bush (130) exploded, with details of the design of the head (131) and the ring (125).
Figure 27 is a front elevation view of an alternative application of the concept of fixed point, whose material embodiment is the bush (143), the upper end of which (145) is fitted to the head (118), and on the side of (145) of the bush (143) the stub (105).
Figure 28 is a cross elevation section through A-A', according to Figure 27 of the bush (143).
Figure 29 is a front elevation view of the bush (143) exploded, with details of the design of the head (118), ring (125), and the body (145) of said bush (143).
Figure 30, is a front elevation view of the bush (147), in another of the possible embodiments of the invention.
Figure 31 is a longitudinal elevation section through A-A' of the bush (147), according to figure 30.
Figure 32 is a detail through "F", according to figure 31.
Figure 33 is a top plan view of the bush (147).
Figure 34 is a variant of the embodiment shown in figure 26, in which the head (118) incorporates inside two slots (134) instead of one.
Figure 35 is a cross section through A-A', according to Figure 34 of the head (118).
Figure 36 is a cross section through B-B', according to Figure 34 of the head (118).
Figure 37 is a cross elevation section through C-C', according to Figure 34 of the head (118).
Figure 38 is a top plan view of the embodiment of the fixed point shown in Figure 34.
Figure 39 is a front elevation section view of the head (118), in an embodiment in which a button lock (116) is used as a retaining element.
Figure 40 is a variant of the embodiment shown in figure 26, in which the head (118) incorporates inside two slots (134) instead of one, and a stub (105), as well a hole.
Figure 41 is a cross section through A-A', according to figure 40.
Figure 42 is a section through B-B', according to Figure 40.
Figure 43 is a top plan view of the head (118) shown in Figure 40.
Figure 44 is a plan view of the device shown in Figure 46.
Figure 45 is a cross elevation section of the device shown in Figure 44.
Figure 46 is a front elevation view of a head (168) in which the support (169) has been incorporated, in the cavity (170) machined on inside the head (189).
Figure 47 is a cross section of the head (168) and support (169) shown in Figure 46.
Figure 48 is a detailed view through "1" according to figure 47.

Below is a list of the different parts of the invention appearing in the above drawings, which are indicated with their respective numbers: (10) vehicle, (11) body, (12) handlebar, (13) tubular structure, (14) lamp post, (15) post, (16) light fitting, (17) chain, (18) retention pivot, (19) chain, (20) frame tube, (21) ring, (22) fixed point, (23) terminal, (24) terminal, (25) runner, (26) stub, (27), (28) nut mounting to frame, (29) weld, (30) threaded stud, (31) elastic pin, (32) securing thread, (33) safety circlip, (34) fixing pivot, (35) terminal, (36) frame plate, (37) main bush, (38) cylindrical section, (39) truncated conical section, (40) pressure screw, (41) hole, (42) circlip, (43) cylindrical section, (44) bush, (45) left-hand part, (46) right-hand part, (47) retaining terminal, (48) chain, (49) retaining terminal, (50) cylindrical cavity, (51) slot, (52) chain, (53) fixing pivot, (54) lock, (55) slot, (56) fixing terminal of the chain (52), (57) terminal, (58) fixing pivot, (59) circlip, (60) tubular structure, (61) pin, (62) antitheft device, (63) antitheft device, (64) hole, (65) chain, (66) plate, (67) plug, (68) stud bolt, upper mounting end, (70) main bush, (71) secondary bush, (72) antitheft device, (74) antitheft device, (75) interior cavity, (76) fixing pivot, (77) cavity in the terminal (24), (78) threaded stud, (79) cavity, (80) pivot, (81) interior cavity of the terminal (35), (82) interior cavity of the right-hand part (46), (83) recessed, (84) point, (85) nut, (86) bush, (87) upper part, (88) lower part, (89) anti-theft layout, (90) antitheft device, (91) cavity, (92) lower point, (93) upper part, (94) bush, (95) lug, (96) pin, (97) stud bolt, (98) antitheft device, (99) antitheft device, (100) bush, (101) body of the bush, (102) upper base, (103) lower base, (104) hole, (105) stub, (106) head, (107) cavity, (108) narrowing, (109) widening, (110) body, (111) support, (112) head of the support, (113) hole, (114) extension, (115) special thread, (116) button lock, (117) setscrew, (118) head, (119) hole, (120) hole, (121) truncated cone portion, (122) cylindrical portion, (123) cylindrical portion, (124) cylindrical portion, (125) ring, (126) cavity, (127) lower base, (128) projection, (129), (130) bush, (131) head, (132) cylindrical body, (133) cavity, (134) slot, (135) recessed, (136) cavity, (137) cylindrical portion, (138) cylindrical portion, (139) cylindrical portion, (140) screw, (141) hole, (142) circular rebate, (143) bush, (144) head, (145) cylindrical body, (146) cavity, (147) bush, (148) cylindrical body, (149) head, (150) cavity, (151) base, (152) slot, (153) circular perimeter, (154) projection, (155) slope, (156) head, (157) slots, (158) lock, (159) shaft, (160) tab, (161) circular ribs, (162) channel, (163) head, (164) stub, (165) lock, (166) lug, (167) passage, (168) head, (169) support, (170) tab, (171-172) annular ribs, (173-174) annular recesses, (175) lock, (176) shaft, (177) passage, (178) hole, (179) cable, (180) shaft, (181) spring, (182) cover.

### Description of an embodiment of the invention.

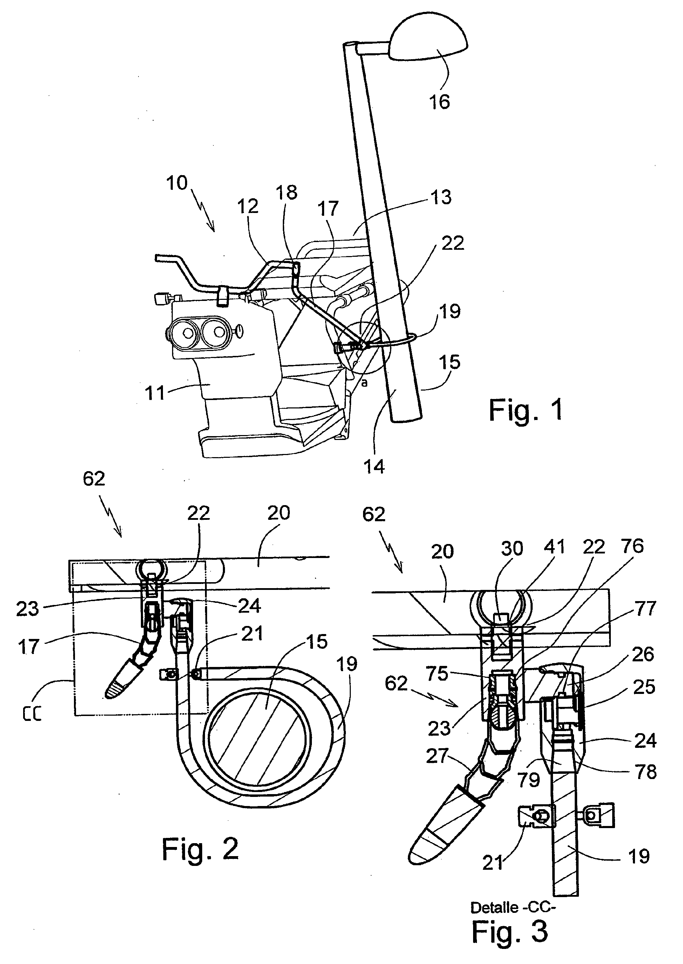

A vehicle (10) of two or more wheels in which a fixed point (22) can be fitted to a tubular structure (13), resulting from the joining of several pipes (20) by welding or similar method, onto which a body shell (11) a handlebar (12), and the other parts are fitted, such as the engine, fuel tank, suspension, wheels and other installations such as electrical, etc., as is as an example in figure 1.

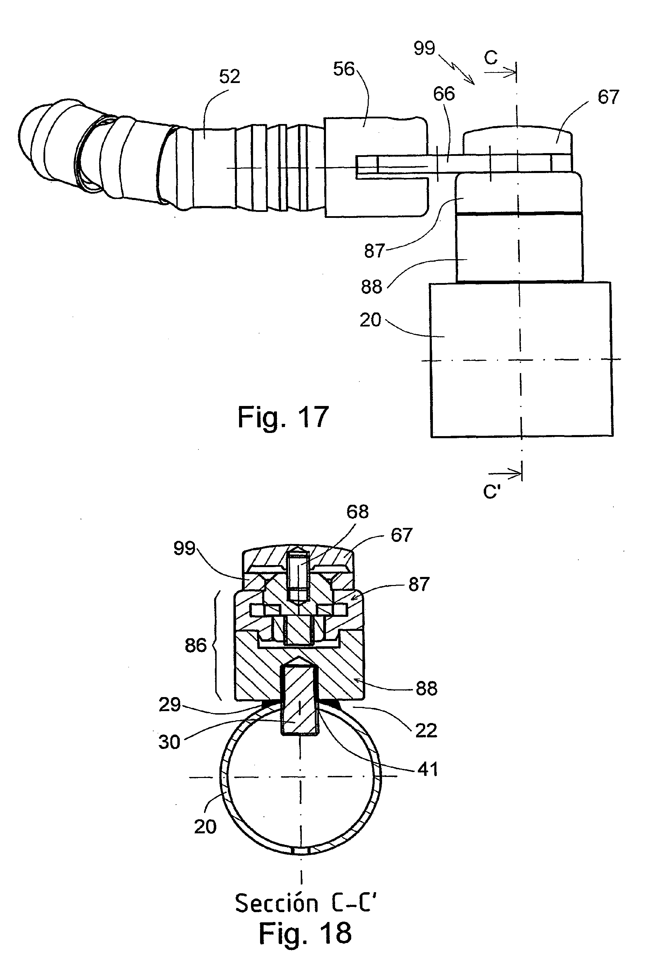

In one of the preferred embodiments of the invention, a fixed point (22), on the tubular structure (13), comprises a stud bolt (30) inserted into the frame tube (20) of the tubular structure (13), through a hole (41), attaching the stud (30) to the frame tube (20) by welding (29), the stud bolt (30) projects a little, sufficient to thread the anti-theft device securely, for instance (99) as shown in figures 17 and 18.

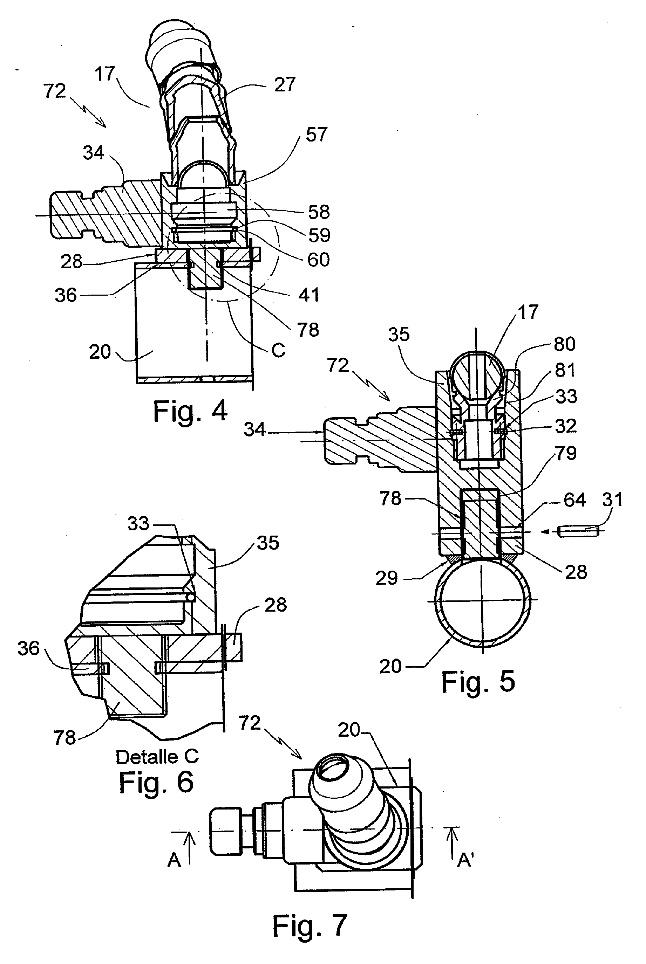

Alternatively, the fixed point (22) has a hexagon nut (28) inserted in the frame tube (20) of the tubular structure (13), through a hole (41), attaching the nut (28) to the frame tube (20) by welding (29), see figure 4.

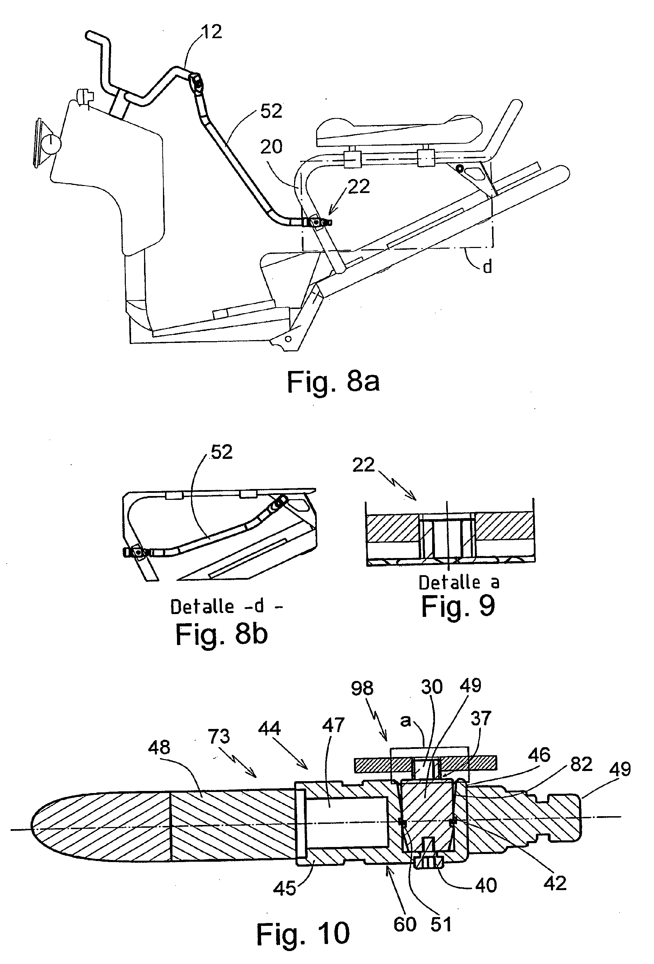

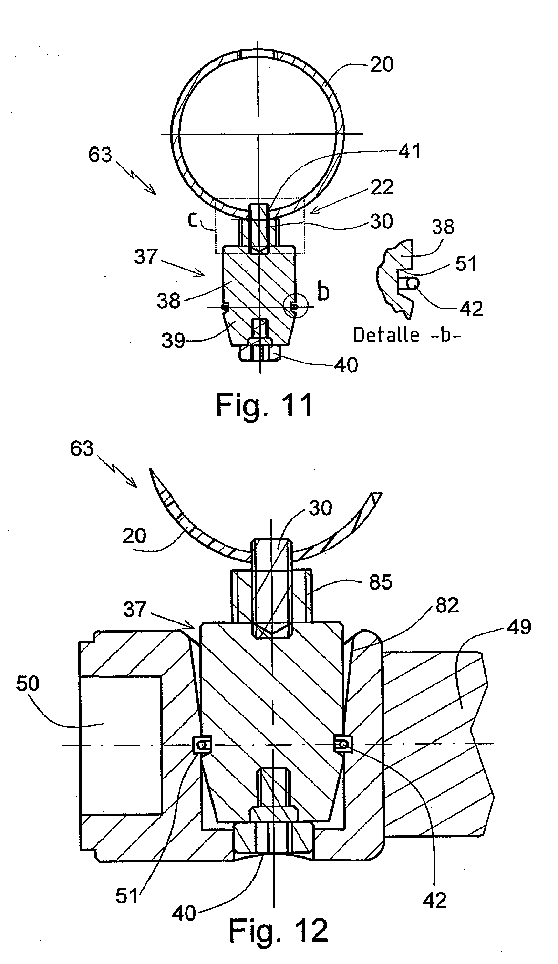

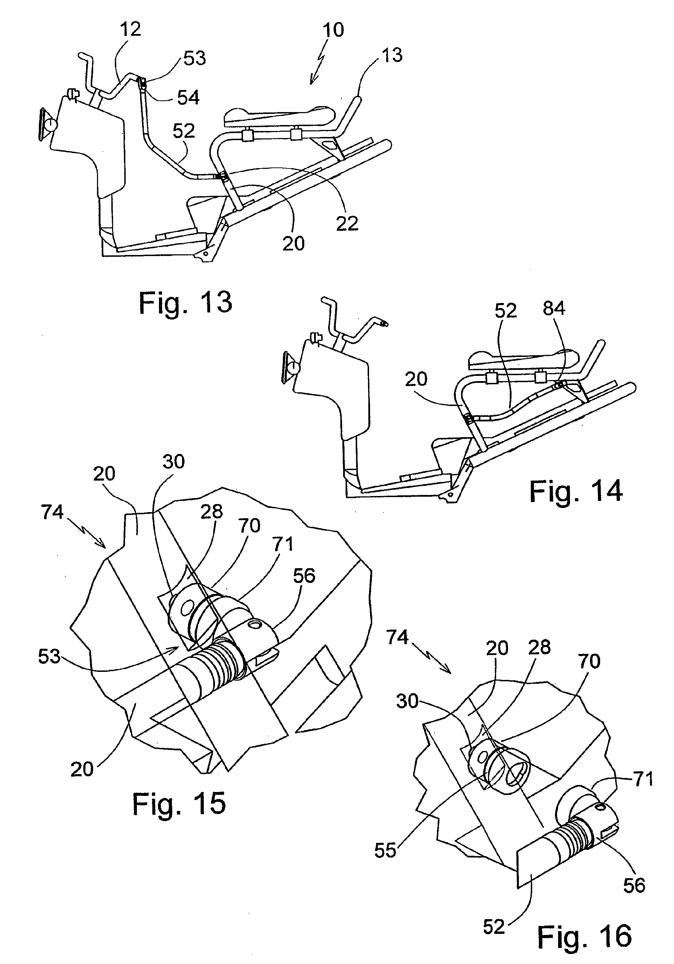

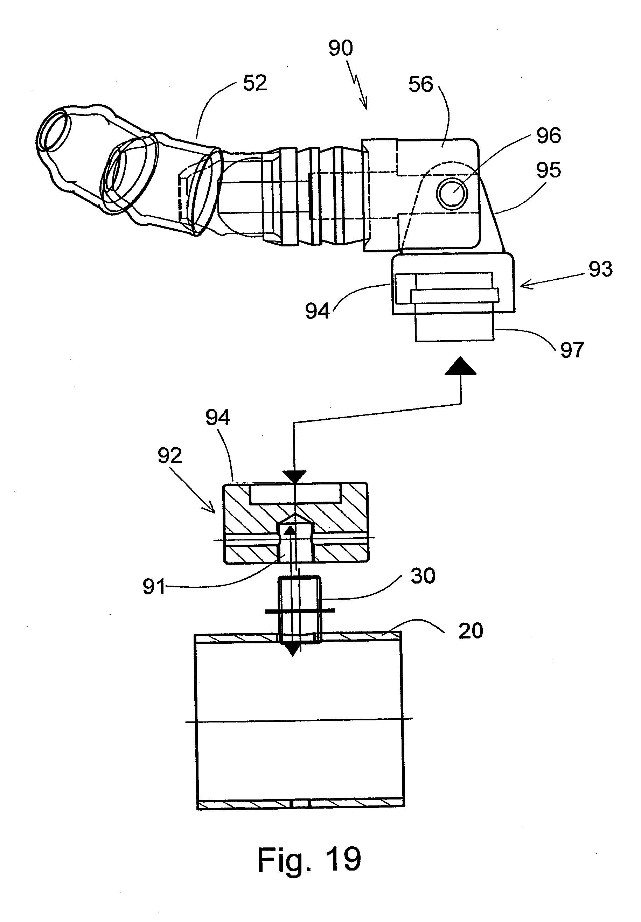

An anti-theft device in its different variations, which is secured to a fixed point (22) in accordance with the invention, as shown in the attached illustrations, for instance the anti-theft device in one version (62) shown in figures 1 to 3, an alternative version (72) to the former is shown in figures 4 to 7, an alternative version (98) to the former is shown in figures 8 to 10, an alternative version (63) to the former is shown in figures 11 and 12, an alternative version (74) to the former is shown in figures 13 to 16, an alternative version (99) to the former is shown in figures 17 and 18, and finally a version (90) that can be seen in figure 19.

In the fixed point (22) that could be located on the handlebar (12), or any point of the tubular structure (13), there can be fitted, in accordance with another characteristics of the invention, an anti-theft device in versions (70-71), with the common characteristic that they are all secured either with a stud (30) or a nut (28) on the fixed point (22), and these devices (70-71) are then secured to the frame tube (20) by welding (29), either spot or bead welded.

Another anti-theft device (98) according to the invention, is shown in figures 8, 9, and 10, incorporating the means to secure it to a fixed point (22).

Anther anti-theft device (74) according to the invention, is shown in figures 13, 14, 15, and 16 incorporating the means to secure it to a fixed point (22).

The anti-theft device (62) comprises, as shown in figures 1 to 3, a terminal, (23), with one end threaded onto stud bolt (30) that is welded (30) to a frame tube (20), part of the stud (30) projecting from the tube (20) enabling the terminal (23) to be threaded onto it, which in one of the possible embodiments, as shown in figure 3. This has an inner cavity (75) at its lower end, cylindrical in shape, to immobilise to a fixing pivot (76) which is on one of the ends of the chain (17) with links (27) ball joints or the like.

The terminal, (23) incorporates on its side a stub (26) so that it is possible to immobilise onto it a terminal, (24), inside which is a cylindrical cavity (77) with the lock, (25), and a second interior cavity (78) for locking a fixing terminal (79), fitted to one of the ends of the chain (19), as may be seen in figure 3.

The functionality of the assembly formed by a fixed point (22) and an anti-theft device in a version (62) shown in figures 1 and 2, is to enable the anti-theft device (72), to immobilise the vehicle (10) to a post (15) of a street lamp (14), the lamp having (14) a column (15) and a light (16) located on its upper end, with the chain (19) secured by the aforementioned means to the terminal, (24) and this in turn secured (24) to the terminal, (23) as described before the fixed point (22). At the same time, the chain (17) joins the handlebar (12) to the tubular structure (13).

Alternatively the anti-theft device (72) comprises, as may be seen in figures 4 to 7, a terminal, (57) preferably cylindrical, the bottom part of which has a stud (78) to which a nut is threaded (28) welded to a plate (36), and (36) to a frame tube (20) forming a fixed point (22), the inside of the terminal (57) having a cavity (79), into which a bush or fixing pivot (58) is secured by known means to the end of a conventional chain (17) with links (27), see figure 4. On the side of the terminal, (57) is secured a (34) to which a chain may be attached, as in (19).

The anti-theft device (72) thus comprises, as shown in figure 5, a terminal, (35), preferably cylindrical, the lower part of which has a cavity (79) also cylindrical and of a smaller diameter, threaded inside, to screw onto a stud bolt (30), welded to a frame tube (20) with a bead weld (29) securing the threaded part with a pin (31) that is inserted in a hole (64) . On the upper part of the terminal (35) there is a cavity, preferably cylindrical (81) into which a pivot (80) fits, which clamps and immobilises a conventional chain.

The pivot (80) has a slot (32) for housing a circlip (33), which once placed on the pivot (80) in the cavity (81), the circlip (33) opens and blocks the pivot (80) when it penetrates (33) the inner slot (32) of the terminal, (35).

Alternatively the anti-theft device in another version (98) shown in figures 8a, 8b, 9 and 10, comprises a tubular structure (60) formed by a right-hand part (46) of a vertical cylindrical shape open at one of its ends the upper closed, and a left-hand part (45) also horizontally cylindrical, the right-hand part (46) incorporates a retaining terminal (49).

Inside the cavity (82) of the right-hand part (46) of the tubular structure (13), see figure 10, is fitted the retaining terminal (49) which by one of its ends is threaded to the stud (30), which welded to the frame tube (20) as may be seen in figure 9. Said retaining terminal (49) is immobilised in the right-hand part (46) by a circlip (42), which is placed in immobilisation position in a slot (51), as may be seen in figure 10.

Alternatively the anti-theft device in another version (63), see figure 11, comprises a main bush (37) which is in turn (37) formed by a cylindrical part (38) that extends downwards in a truncated cone part (39), and between parts (38-39) there is a slot (51), see figure 12 to hold the circlip (42), which opens when entering the slot (51) immobilising the main bush inside the cavity (82), of the right-hand part (46) of the tubular structure (60), see detail "b" in figure 11.

The stud (30) is threaded to the upper part of the main bush (37), immobilising (30) to (37) with a nut (85), see figure 12.

Alternatively, the anti-theft device (74), as may be seen in figures 13 to 19, comprises a main bush (70) to which a the secondary bush (71) is incorporated by adequate means, leaving a slot (55) between (70-71), so the bush (71) can turn with regard to the main bush (70), securing to said secondary bush (71) the terminal, (56), joined (56) to one of the ends of the chain (52). In turn, the secondary bush (71) is fitted to the main bush (70) by the recess (83) in the upper part of the bush main (70).

The anti-theft device (74) as shown in figure 15, is threaded onto the nut (28) of the fixed point (22), located on the frame tube (20), the chain in active situation (52) immobilising the handlebar (12), as may be seen in figure 13 by one of its ends thanks to the fixing pivot (53) and lock, (54) to the frame tube (20), while in standby position, as can be seen in figure 14 the fixing support (53) it secured to a point on any part of the vehicle chassis.

Figures 17 and 18 show the features of a anti-theft device in version (99), comprising a bush (86) formed by an upper part (87) and a lower part (88), in the upper part (87), as can be seen in figure 18, is fitted a plate (66) by the stud bolt (68) to which the protective plug is threaded (67), joining the bush (86) to the frame tube (20) with the stud (30), the upper part of which (30) is secured to (20) by welding (29), and by the upper part, the stud bolt (30) is screwed onto the lower side (88) of the bush (86).

The chain (52) is fitted by one of its ends to the fixing terminal (56) and this is secured to the plate (66) by a pin (not illustrated).

Alternatively an anti-theft device in another version (90) see figure 19, has a stud bolt (30) welded on one end to the frame tube (20), while the other end is screwed into the cavity (91), of the lower part (92) of a bush (94), while the upper part (93) is joined to a terminal, (56) by means of a lug (95) and a pin (96), in turn the terminal, (56) receives one end of the chain (52). The parts (92-93) of the bush (94) are joined with the stud bolt (97).

The embodiment of the fixed concept point applied to a part of the tubular structure of a vehicle of two or more wheels or to the chassis, has revealed itself, via Invention Patent Application of the same holder 200930917, to have multiple possible applications and their respective embodiments that by the present addition are enlarged with new applications, based on the demands of different manufacturers and which enable the adaptation of said concept to their specific vehicles.

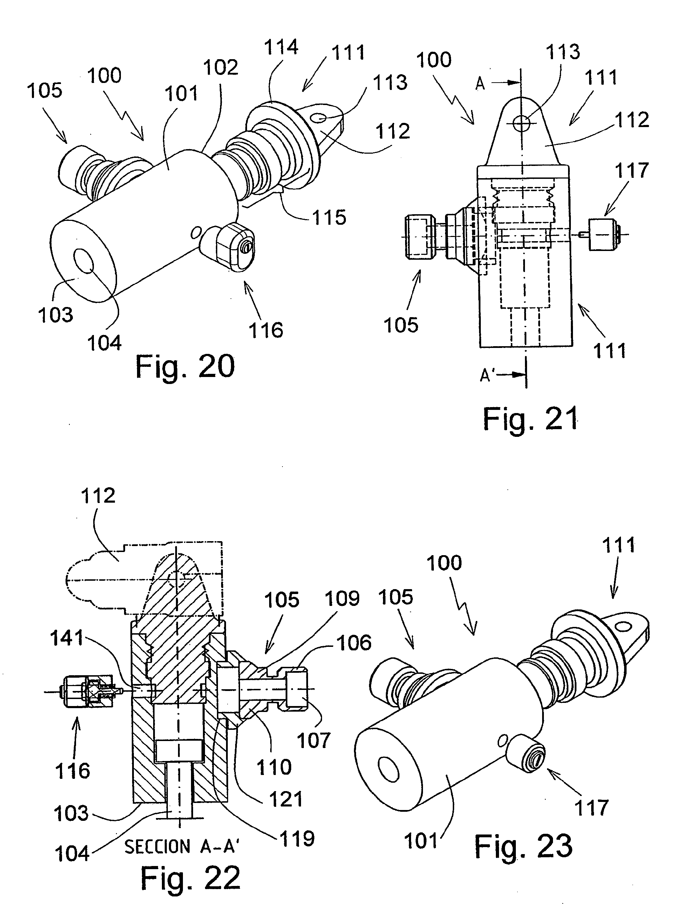

In one of the new possible embodiments, as shown in figures 20 to 23 the bush (100) has a cylindrical body (101) with flat upper and lower end (102-103), fitting to the upper base (102) and in the central orifice, (104) it contains, the support (111), the side of the cylindrical body (101), there are holes (119-141) opposite each other, to fit a stub (105) and a button lock (116) respectively, as may be seen in figure 22. The body of the bush (100) may adopt other exterior configurations in addition to cylindrical without altering its functionality.

The support (111), as may be seen in figure 20 through the hole (113), allows the mounting of the corresponding chain with links or similar (not depicted in the illustrations) in the hole (113), that joins the fixed point through the bush (100) and this in turn to the vehicle chassis or a resistant structure of the same, with the handlebar of the vehicle, or with an element of street furniture, to avoid the vehicle being loaded onto a truck or similar for robbery, even though the handlebar is immobilised.

Figures 20 and 21 also show the design of this support (111), which includes a flat head (112) where the mentioned hole is located (113), extending downwards (112) with an extension (114) of circular perimeter that continues with a special thread with several diameters (115), which (115) fits into the cavity (121) on the inside of the cylindrical body (101) of the bush (100), as can be seen in figure 22.

The stub (105) which is shown in cross-section in figure 3, has a head (106) with a cavity (107) designed for an Allen key or the like for fitting onto the body of the bush (100), this head (106) extending in a narrowing (108), that extends to a cylindrical part (109), and an truncated cone area (110), that in turn extends to another truncated cone section (121) that fits in the hole (119) of the body (101).

To fit the bush (100), it is secured to the tubular structure or chassis of the vehicle by means of the hole (104) in the lower end of the body (101), then the support (111) is inserted into the cavity (121) by the upper end of the body (101), then the stub (105) is threaded in the hole (119) secured to the support (111), and finally the user fits the button lock (116) in the hole (141), completely locking the assembly and it is ready to act as a fixed point of an chain joined to the support (112) through the hole (113).

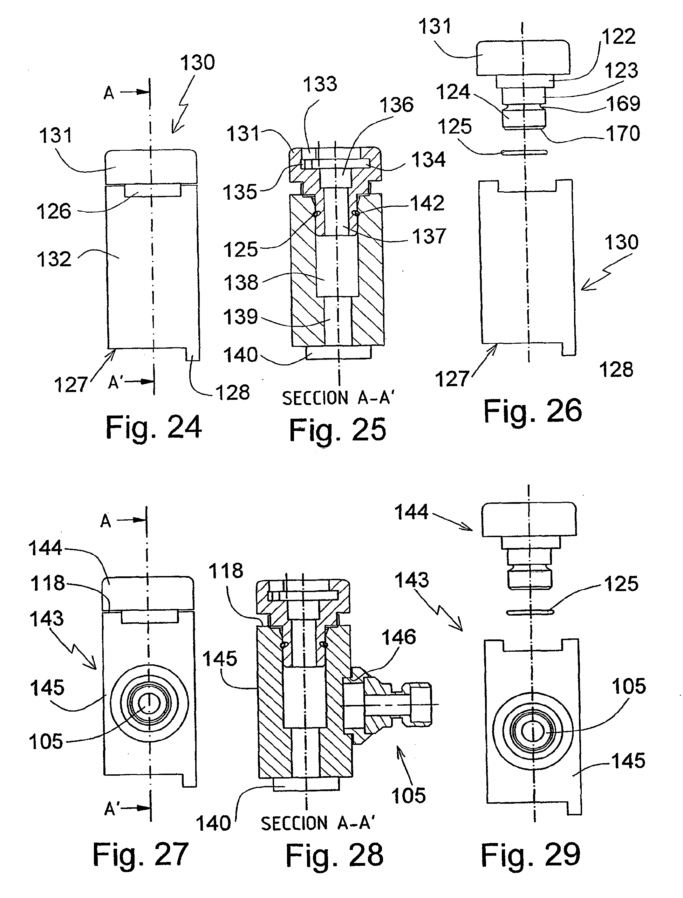

In another of the possible embodiments of the invention, as may be seen in figures 24 to 26, the fixed point is formed by the bush (130), which includes a head (131) and a cylindrical body (132).

The body (132) has on its upper base, a cavity (126), in which the cylindrical portion (122) of the head (131) fits, and in the lower base (127) there is a projection (128).

In the head (131) and in its inner part is immobilised the end of a chain with links (not illustrated).

The head (131) is depicted in detail in figures 25 and 26, and is designed to have an interior cavity (133), machined with a circular slot (134), which (134) has a recess (135), the slot in turn (134) extends inside and downwards in cylindrical cavities of different diameters and lengths (136-139), and on the outside thy extend down in cylindrical portions (122-123-124), and between the portions (123-124) there is a circular cavity (169), to fit the seal or ring (125), ending the head (131) in a truncated conical portion (170) of little height, as shown in figure 26.

The bush (130) is fitted to the tubular structure of a vehicle of two or more wheels (Not depicted in the figures), with a screw (140) that penetrates the interior cavity (139) as can be seen in figure 25, and the head (131) is retained on the cylindrical body (132) with the aid of the seal (125), that expands on the inside of the circular cavity (142) stopping the bush from detaching (130) from the tubular structure or chassis of the vehicle (not represented in the illustrations).

When the user wishes to immobilise the vehicle, they will place the end of the chain inside the slot (134), the end of the chain having an annular body with a tab-shaped projection, that is housed in the slot (134), the tab and the annular body entering the inside of the recess (135), and then turning them so it is not possible to separate the chain from the bush (130), acting as a (130) fixed point, once the user has placed the end of the chain inside the head (131), and has turned it until the tab is retained in the recess (135), as noted above.

In another of the possible embodiments, as may be seen in figures 27 a 29, the bush (143) includes the head (144) and the cylindrical body (145) of said bush (143), fitting to the latter (143) and in its side the stub (105). The cylindrical body (145) of the bush (143) has a hole (146) on its side, for fitting the stub (105). The formal and functional features of the head and the cylindrical body (144-145) are the same as described for the head and cylindrical body (131-132), so the cylindrical body (145) is versatile and allows one or two anchoring points in a single fixed point.

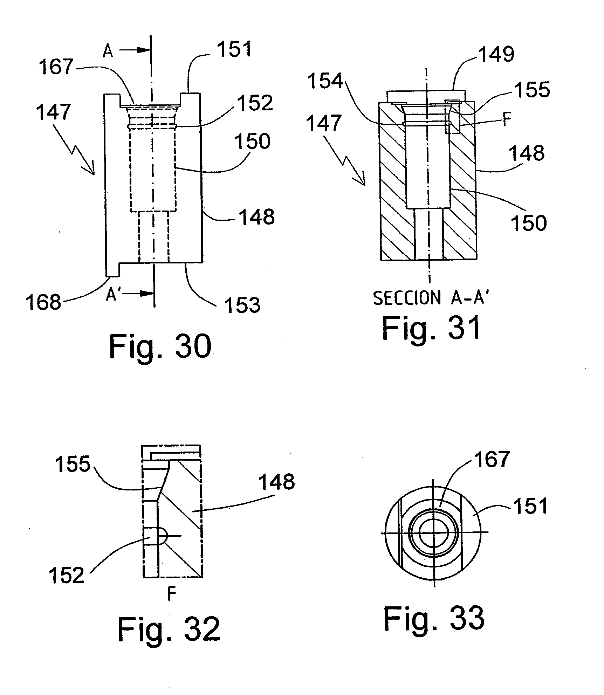

In another of the possible embodiments of the invention, the bush (147) as may be seen in figures 30 to 33, comprises a cylindrical body (148) machined so that its upper part, the end (151) has a cavity (167) in which a head (149) is fitted, which fits into the cavity (150) on the body (148) of the bush (147). The bush in turn (147) and its body (148) are immobilised to the tubular structure of the vehicle (Not represented in the figures) by the lower end (153) using suitable means, having made a ridge (168) in this base (153).

Figure 32, detail "F", shows how the head (149) is immobilised in the cavity (150) designed on the inside of the body (148), having made in it (148) an inner circular slot (152), into which the ridge of circular perimeter (154) if fitted by pressure, guiding the entry of the head (149) in the cavity (150) by the slope (155).

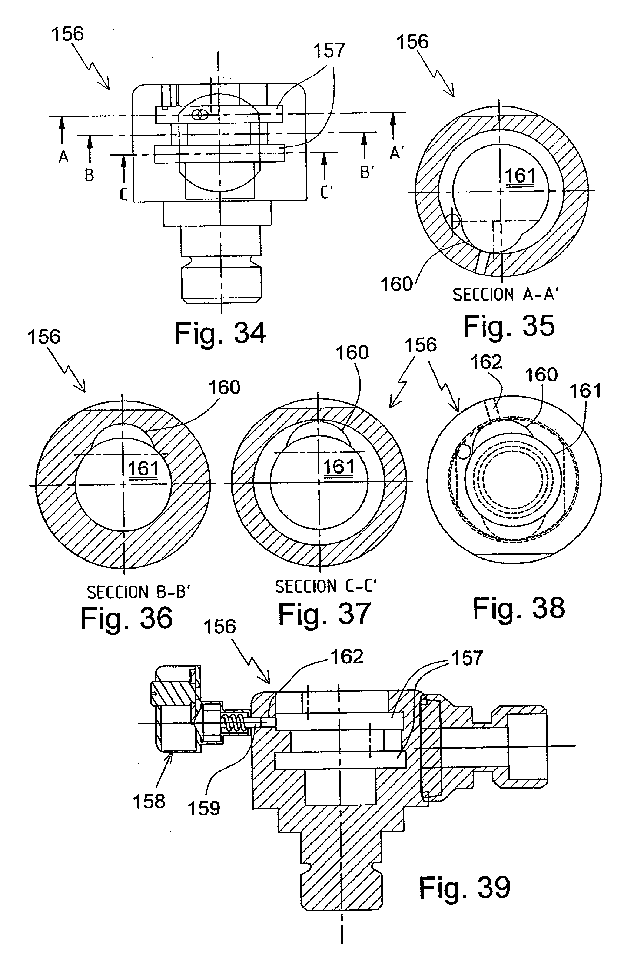

In another of the possible embodiments, as may be seen in figures 34 to 39, any head of described above, e.g., the one distinguished as (156) has had two slots (157) machined inside, instead of one slot such as in head (131) shown in figure 25, thus, if someone tries to break the fixed point, and pull off one end of the head chain (156) see figures 34 and 39 which have the annular body (171) and a tab (172), the force needed to do this is much greater, and the possibilities of turning the chain and its annular body end (171) to free it from the head (156) and the slots (157), is also impeded with a sealing (158), so that un single shaft (159) that is a part of said sealing (158) and that slides through the passage (173) locking the tab (160), that forms a part of the annular bodies (161) present in the end of the chain (Not represented in the figures), but if these annular bodies (161) in figures 16 to 18 in different positions, and in figure 39, which shows how the shaft (159) when it slides along channel (162), stops the free rotation of the ribs (161) in the slots (157).

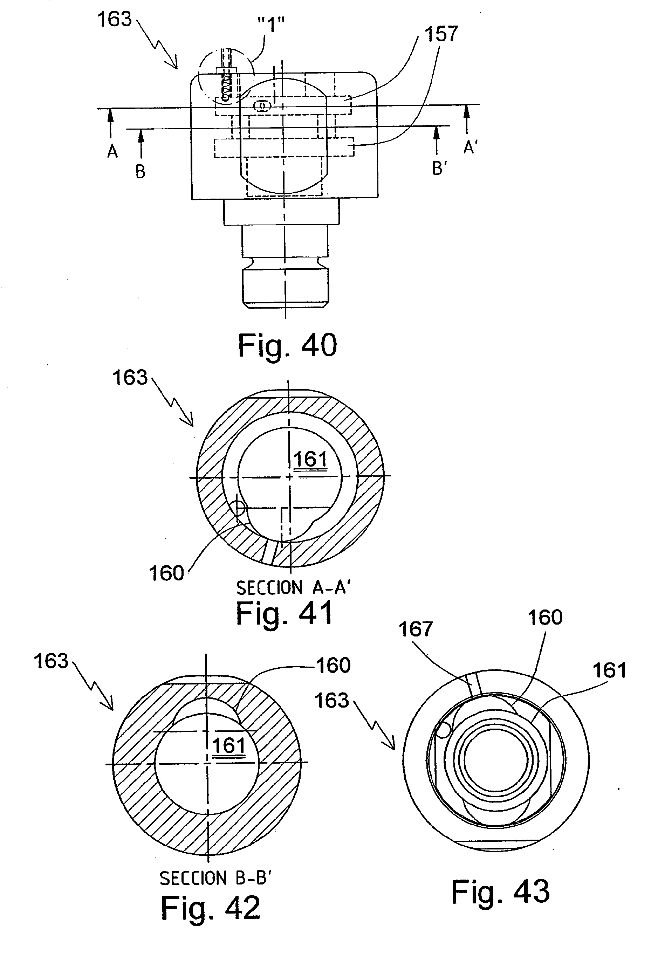

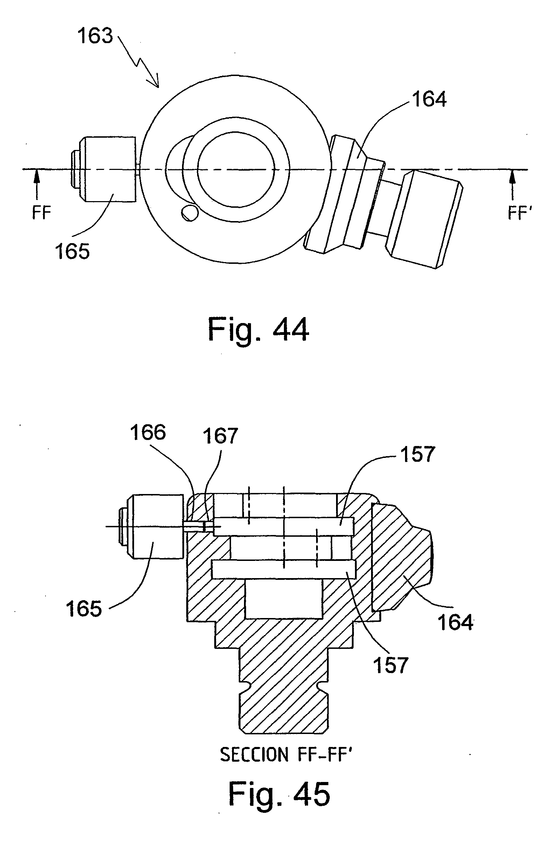

In another possible embodiment of the invention, as shown in figures 40 to 45, in contrast to the previous head (156), the head in this case (163) includes on its side a stub (164), and the lock (165) of a different type from that shown in figure 39, but with the same functionality, which is none other than by means of the lug (166) sliding along the passage (167), to lock the tab (160) of the annular bodies (161) that fit into the slots (157).

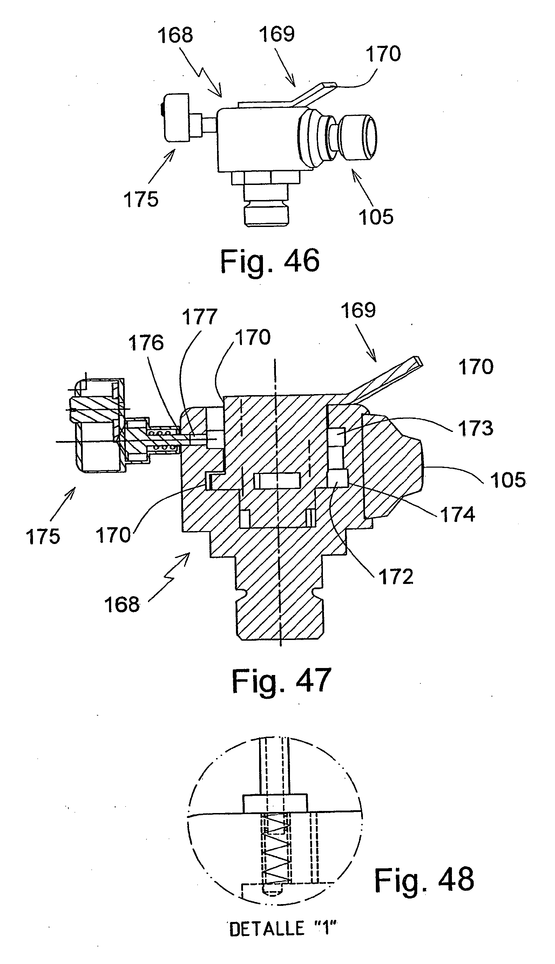

Alternatively, as shown in figures 40 and 48, the annular bodies (161) can be locked through a shaft (180) linked by its upper end to a cable, (179) sliding in a sheath (182), so that when the user closes the anti-theft device using this cable, (179) this will pull the shaft (180) against the expansion action of the spring (181), sliding (180) through the hole (178) on the body of the head (163) freeing the annular bodies (161) and with is the corresponding chain (Not represented in the figures).

Finally, in another of the possible embodiments the head (189) it has been machined inside to fit the support (169), on the tab of which (170) one end of a chain a chain with links is fitted (Not represented in the figures). The support (169) has body with annular ribs (171-172) that fit into the annular recesses (173-174).

To prevent the support (169) being turned to free the chain secured to the tab (170), there is a lock, (175) the shaft of which (176) slides to the right and a left of the passage (177) locking the support (169).

On the body of the head (168) the same as in other embodiments, there is a stub (105).

Having sufficiently described this invention using the figures attached, it is easy to understand that any modification may be made to the detail which may be deemed to be appropriate, whenever these changes do not alter the essence of the invention summarised in the following claims.

## Claims

1. An anti-theft device arrangement comprising a vehicle having a frame and a handlebar, said handlebar adapted to be secured to a fixed point provided on the vehicle chassis by mechanical means (23,27) comprising a terminal and a conventional chain with links, said fixed point comprises a stud bolt (30) inserted into vehicle frame tube through a hole and attached to the frame by welding, said stud bolt projecting from the frame, **characterized in that** said mechanical means further comprises a terminal (23), with one end threaded onto said stud bolt (30), said terminal (23) incorporates on its side a stub (26), said stub (26) adapted to be connected to a second terminal (24), said second terminal (24) adapted to be receive a terminal end (79) of a chain (19).

2. An anti-theft device arrangement according to claim 1, **characterized in that** said mechanical means comprises a terminal 57 preferably cylindrical, the bottom part of which has a stud (78) to which a nut is threaded (28) welded to a plate (36), and said plate (36) is welded to a frame tube (20), which forms part of a tubular structure (13), forming a fixed point, the inside of the terminal (57) having a cavity (79) adapted to receive_a bush or fixing pivot (58), said fixing pivot (58) being secured by known means to the end of a conventional chain (17) with links (27) of the mechanical means.

3. An anti-theft device arrangement according to claim 2, **characterized in that** on the side of the terminal (57), there is a fixing pivot (34), adapted to receive a terminal end of a chain (19).

4. An anti-theft device arrangement according to claim 1, **characterized in that** said mechanical means comprises a tubular structure (60) formed by a right-hand part (46) of a vertical cylindrical shape open at one of its ends the upper closed, and a left-hand part (45) also horizontally cylindrical, the right-hand part (46) incorporates a retaining terminal (49), adapted to receive a terminal end of a second chain.

5. An anti-theft device arrangement according to claim 4, **characterized in that** the tubular structure (60) comprises a cavity (82) adapted to receive the retaining terminal (49) which by one of its ends is threaded to the stud (30), said retaining terminal (49) is immobilised in the right-hand part (46) of the tubular structure (60) by a circlip (42), which is placed in immobilisation position in a slot (51) in the cavity (82).

6. An anti-theft device arrangement according to claim 1, **characterized in that** said mechanical means further comprises a terminal 56, adapted (56) to receive in one of the ends of the chain (52), and securing to said the terminal(56) a secondary bush (71),which is incorporated to a main bush (70), leaving a slot (55) between (70-71), so the bush (71) can turn with regard to the main bush (70), being the secondary bush (71) fitted to the main bush (70) by the recess (83) in the upper part of the bush main (70).

7. An anti-theft device arrangement according to claim 1, **characterized in that** said mechanical means further comprises a terminal (56), adapted to receive by one of its ends the chain (52), and being the said terminal secured to the plate (66) by a pin, adapted said plated to be fitted to the upper part (87) of a bush (86), stud bolt (68) to which the protective plug (67) is threaded, joining the bush (86) to the frame tube (20) with the stud (30), the upper part of which (30) is secured to (20) by welding (29), and by the upper part, the stud bolt (30) is screwed onto the lower side (88) of the bush (86).

8. An anti-theft device arrangement according to claim 1, **characterized in that** the stud bolt (30) welded on one end to the frame tube (20), having the other end screwed into the cavity (91) of the lower part (92) of a bush (94), while the upper part (93) is joined to a terminal (56) by means of a lug (95) and a pin (96), in turn the terminal (56) is adapted to receive one end of the chain (52), being the parts (92-93) of the bush (94) joined with the stud bolt (97).

9. An anti-theft device arrangement according to claim 1 **characterized in that**, the fixed point comprises a bush (100) that has a cylindrical body (101) with flat upper and lower end (102-103) and with a central orifice (104) adapted to be secured to the tubular structure or chassis of the vehicle in its lower end, and adapted to receive a support (111) in its upper end, wherein the support (111) allows the mounting of the corresponding chain with links in the hole (113), joins the fixed point through the bush (100) to the same; and wherein the side of the cylindrical body (101) further comprises holes (119-141) opposite each other, to fit a stub (105) and a button lock (116).

10. An anti-theft device arrangement according to claim 9 **characterized in that** the support (111), includes a flat head (112) where the mentioned hole (113) is located, extending downwards (112) with an extension (114) of circular perimeter that continues with a special thread with several diameters (115), which (115) fits into the cavity (121) on the inside of the cylindrical body (101) of the bush (100).

11. An anti-theft device arrangement according to claim 9 **characterized in that** the stub (105) has a head (106) with a cavity (107) designed for an Allen key or the like for fitting onto the body of the bush (100), this head (106) extending in a narrowing (108), that extends to a cylindrical part (109), and an truncated cone area (110), that in turn extends to another truncated cone section (121) that fits in the hole (119) of the body (101).

12. An anti-theft device arrangement according to claim 1 **characterized in that** the fixed point comprises the bush (130), which includes a head (131) and a cylindrical body (132), which has on its upper base, a cavity (126), in which the cylindrical portion (122) of the head (131) fits, and in the lower base (127) there is a projection (128).

13. An anti-theft device arrangement according to claim 12 **characterized in that** the head (131) is designed to have an interior cavity (133), machined with a circular slot (134), which (134) has a recess (135), the slot in turn (134) extends inside and downwards in cylindrical cavities of different diameters and lengths (136-139), and on the outside thy extend down in cylindrical portions (122-123-124), and between the portions (123-124) there is a circular cavity (169), to fit the seal or ring (125), ending the head (131) in a truncated conical portion (170) of little height.

14. An anti-theft device arrangement according to claim 12 **characterized in that** the bush (130) is fitted to the tubular structure of a vehicle of two or more wheels (not depicted in the figures), with a screw (140) that penetrates the interior cavity (139) as can be seen in figure 6, and the head (131) is retained on the cylindrical body (132) with the aid of the seal(125), that expands on the inside of the circular cavity (142) stopping the bush from detaching from the tubular structure or chassis of the vehicle.

15. An anti-theft device arrangement according to claim 1 **characterized in that** the fixed point comprises the bush (143) which includes the head (144) and the cylindrical body (145) of said bush (143), fitting to the latter (143) and in its side the stub (105), wherein the cylindrical body (145) of the bush (143) has a hole (146) on its side, for fitting the stub (105).

16. An anti-theft device arrangement according to claim 1 **characterized in that** the fixed point comprises the bush (147) which comprises a cylindrical body (148) machined so
that its upper part, the end (151) has a cavity (167) in which a head (149) is fitted, which fits into the cavity (150) on the body (148) of the bush (147), wherein the bush (147) and its body (148) are immobilised to the tubular structure of the vehicle by the lower end (153) using suitable means, having made a ridge (168) in this base (153).

17. An anti-theft device arrangement according to claim 16 **characterized in that** the head (149) is immobilised in the cavity (150) designed on the inside of the body (148), having made in it an inner circular slot (152), into which the ridge of circular perimeter (154) if fitted by pressure, guiding the entry of the head (149) in the cavity (150) by the slope (155).

18. An anti-theft device arrangement according to claim 16 **characterized in that** the head has two slots (157) machined inside, thus, if someone tries to break the fixed point, and pull off one end of the head chain (156), the force needed to do this is much greater, and the possibilities of turning the chain and its annular body end (171) to free it from the head (156) and the slots (157), is also impeded with a sealing (158), so that un single shaft (159) that is a part of said sealing (158) and that slides through the passage (173) locking the tab (160) that forms a part of the annular bodies (161) present in the end of the chain.

19. An anti-theft device arrangement according to claim 16 **characterized in that** the head includes on its side a stub (164), and the lock (165), which by means of the lug (166) sliding along the passage (167) to lock the tab (160) of the annular bodies (161) that fit into the slots (157) inside the head (163).

20. An anti-theft device arrangement according to claim 1 **characterized in that** the fixed point comprises the bush into which a head fits (168) comprising a support (169) inside of which is a support (169), as the inside of the body of the head (168) has a cavity with annular recesses (173-174).

21. An anti-theft device arrangement according to claim 20 **characterized in that** the support (169) has a cylindrical body, the upper part of which expands with a tab (170) and in the side surface of the body has annular ribs (171-172).

22. An anti-theft device arrangement according to claim 20 **characterized in that** the head (168) and on its side, there is a lock, (175) and a stub (105), the support (169) moving through a shaft (176) of 15 this lock, (165) that slides to the right and a left of the passage (177).

23. An anti-theft device arrangement according to claim 20 **characterized in that** on the body of the head (163) there is a hole (178) into which a shaft is fitted (180) surrounded, by a spring (181) joining the upper end of the shaft (180) to the cable, (179) surrounded by a sheath (182).

## Patentansprüche

1. Eine Diebstahlsicherungsvorrichtung bestehend aus einem Fahrzeug mit einem Rahmen und einem Lenker, wobei der Lenker dazu vorbereitet ist, mit mechanischen Mitteln (23, 27) in Form eines Anschlusses und einer konventionellen Kette mit Kettengliedern an einem Befestigungspunkt am Fahrgestell gesichert zu werden, wobei der Befestigungspunkt einen Stehbolzen (30) umfasst, der durch eine Öffnung in den Rohrrahmen des Fahrzeugs eingesetzt ist und mit dem Rahmen verschweißt ist, wobei dieser Stehbolzen aus dem Rahmen hervorsteht, **dadurch gekennzeichnet, dass** diese mechanischen Mittel des Weiteren ein Anschlussteil (23) umfassen, wovon eine Seite auf den Stehbolzen (30) geschraubt ist, wobei das Anschlussteil (23) auf seiner Seite einen Stutzen (26) aufweist, wobei dieser Stutzen (26) für den Anschluss an ein zweites Anschlussteil (24) vorbereitet ist, wobei dieses zweite Anschlussteil (24) für die Aufnahme des Anschlussteils (79) einer Kette (19) vorbereitet ist.

2. Eine Diebstahlsicherungsvorrichtung gemäß Anspruch 1, **dadurch gekennzeichnet, dass** die mechanischen Mittel ein vorzugsweise zylindrisches Anschlussteil (57) umfassen, an dessen Unterseite sich ein Bolzen (78) befindet, auf den eine Mutter (28) geschraubt wird, die an einer Platte (36) angeschweißt ist, wobei diese Platte (36) ihrerseits an einem Fahrgestellrohr (20) angeschweißt ist, das Teil eines Rohrrahmens (13) ist und einen Befestigungspunkt bildet, und wobei das Anschlussteil (57) einen Hohlraum (79) zur Aufnahme einer Hülse bzw. eines Befestigungszapfen (58) hat, wobei der Befestigungszapfen (58) mit bekannten Mitteln am Ende einer konventionellen Kette (17) mit Kettengliedern (27) der mechanischen Mittel befestigt ist.

3. Eine Diebstahlsicherungsvorrichtung gemäß Anspruch 2, **dadurch gekennzeichnet, dass** sich auf der Seite des Anschlussteils (57) ein Befestigungszapfen (34) befindet, der zur Aufnahme eines Anschlussteils einer Kette (19) dient.

4. Eine Diebstahlsicherungsvorrichtung gemäß Anspruch 1, **dadurch gekennzeichnet, dass** die mechanischen Mittel eine Rohrkonstruktion (60) umfassen, die die durch ein rechtes Teil (46) mit einer vertikal zylindrischen Form, das auf einer Seite offen und an der Oberseite geschlossen ist, und ein linkes Teil (45) mit einer horizontal zylindrischen Form gebildet wird, wobei das rechte Teil (46) einen Arretieranschluss (49) zur Aufnahme eines Anschlussteils einer zweiten Kette aufweist.

5. Eine Diebstahlsicherungsvorrichtung gemäß Anspruch 4, **dadurch gekennzeichnet, dass** die Rohrkonstruktion (60) einen Hohlraum (82) zur Aufnahme des Arretieranschlusses (49) umfasst, der auf einer Seite auf den Bolzen (30) geschraubt ist, wobei dieser Arretieranschluss (49) im rechten Teil (46) der Rohrkonstruktion (60) durch einen Sprengring (42) arretiert wird, der sich in Fixierungsposition in einer Nut (51) im Hohlraum (82) befindet.

6. Eine Diebstahlsicherungsvorrichtung gemäß Anspruch 1, **dadurch gekennzeichnet, dass** die mechanischen Mittel des Weiteren ein Anschlussteil (56) umfassen, das zur Aufnahme eines Endes der Kette (52) dient, und dass an diesem Anschlussteil (56) eine Sekundärhülse (71) befestigt wird, die sich an einer Haupthülse (70) befindet, wobei eine Nut (55) zwischen (70-71) vorhanden ist, damit die Hülse (71) in Bezug zur Haupthülse (70) drehen kann, und wobei die Sekundärhülse (71) durch die Auskehlung (83) an der Oberseite der Haupthülse (70) an der Haupthülse (70) befestigt ist.

7. Eine Diebstahlsicherungsvorrichtung gemäß Anspruch 1, **dadurch gekennzeichnet, dass** die mechanischen Mitteln des Weiteren ein Anschlussteil (56) umfasst, das zur Aufnahme der Kette (52) auf einer seiner Seiten dient, und dass das Anschlussteil mit einem Stift an der Platte (66) befestigt ist, wobei die Platte zur Befestigung an der Oberseite (87) einer Hülse (86), eines Stehbolzens (68) vorbereitet ist, auf den der Schutzstopfen (67) geschraubt wird, wobei die Hülse (86) am Rahmenrohr (20) mit dem Bolzen (30) verbunden wird, dessen Oberseite (30) durch Schweißen (29) mit (20) verbunden ist, und an der Oberseite ist der Stehbolzen (30) in die Unterseite (88) der Hülse (86) geschraubt.

8. Eine Diebstahlsicherungsvorrichtung gemäß Anspruch 1, **dadurch gekennzeichnet, dass** der Stehbolzen (30) auf der einen Seite am Rahmenrohr (20) verschweißt ist, und das andere Ende in den Hohlraum (91) an der Unterseite (92) einer Hülse (94) geschraubt ist, während die Oberseite (93) mittels einer Öse (95) und einem Stift (96) mit einem Anschlussteil (56) verbunden ist, wobei das Anschlussteil (56) zur Aufnahme eines Endes der Kette (52) dient, wobei die Teile (92-93) der Hülse (94) mit dem Stehbolzen (97) verbunden werden.

9. Eine Diebstahlsicherungsvorrichtung gemäß Anspruch 1, **dadurch gekennzeichnet, dass** der Befestigungspunkt eine Hülse (100) mit zylindrischem Körper (101) mit flacher Ober- und Unterseite (102-103) und mit einer mittleren Öffnung (104) umfasst, die an ihrer Unterseite an der Rohrkonstruktion oder am Fahrgestell des Fahrzeugs befestigt wird, und an ihrer Oberseite zur Aufnahme einer Halterung (111) dient, wobei die Halterung (111) die Montage der entsprechenden Kette mit Kettengliedern in der Öffnung (113) ermöglicht, und den Befestigungspunkt über die Hülse (100) daran befestigt, und wobei die Seite des zylindrischen Körpers (101) des Weiteren sich gegenüber liegende Öffnungen (119-141) zum Befestigen eines Stutzens (105) und eines Knopfschlosses (116) umfasst.

10. Eine Diebstahlsicherungsvorrichtung gemäß Anspruch 9, **dadurch gekennzeichnet, dass** die Halterung (111) ein flaches Kopfstück (112) aufweist, worin sich die Öffnung (113) befindet, die sich nach unten (112) mit einer Verlängerung (114) des kreisförmigen Umfangs erstreckt, und durch ein Spezialgewinde mit unterschiedlichen Durchmessern (115) fortgesetzt wird, das (115) in den Hohlraum (121) auf der Innenseite des zylindrischen Körpers (101) der Hülse (100) passt.

11. Eine Diebstahlsicherungsvorrichtung gemäß Anspruch 9, **dadurch gekennzeichnet, dass** der Stutzen (105) einen Kopf (106) mit einem Hohlraum (107) zum Einsetzen eines Innensechskantschlüssels o. ä. in den Körper der Hülse (100) aufweist, wobei sich dieser Kopf (106) mit einer Verjüngung (108) verlängert wird, die sich in einen zylindrischen Teil (109) und einen kegelstumpfförmigen Bereich (110) erstreckt, der sich wiederum in einen weiteren kegelstumpfförmigen Abschnitt (121) erstreckt, der in die Öffnung (119) des Körpers (101) passt.

12. Eine Diebstahlsicherungsvorrichtung gemäß Anspruch 1, **dadurch gekennzeichnet, dass** der Befestigungspunkt die Hülse (130) umfasst, die einen Kopf (131) und einen zylindrischen Körper (132) aufweist, der auf der Oberseite einen Hohlraum (126) aufweist, worin der zylindrische Abschnitt (122) des Kopfs (131) passt, und an der Unterseite (127) befindet sich ein Überstand (128).

13. Eine Diebstahlsicherungsvorrichtung gemäß Anspruch 12, **dadurch gekennzeichnet, dass** der Kopf (131) so konstruiert ist, dass er auf seiner Innenseite den Hohlraum (133) aufweist, in die eine Ringnut (134) gearbeitet ist, wobei (134) eine Auskehlung (135) aufweist, und wobei sich die Nut (134) ihrerseits innen und in Abwärtsrichtung in zylindrische Hohlräume unterschiedlicher Durchmesser und Längen (136-139) erstreckt, und an der Außenseite erstrecken sie sich in Abwärtsrichtung in zylindrischen Abschnitten (122-123-124), und zwischen den Abschnitten (123-124) befindet sich ein kreisförmiger (169) für die Montage der Dichtung oder des Rings (125), wobei der Kopf (131) in einem kegelstumpfförmigen Abschnitt (170) geringer Höhe endet.

14. Eine Diebstahlsicherungsvorrichtung gemäß Anspruch 12, **dadurch gekennzeichnet, dass** die Hülse (130) mit einer Schraube (140) an der Rohrkonstruktion eines Fahrzeugs mit zwei oder mehr Rädern (in den Abbildungen nicht dargestellt) befestigt wird, die in den inneren Hohlraum (139) eingesetzt ist, wie dies in der Abb. 6 zu erkennen ist, und wobei der Kopf (131) mittels der Dichtung (125) auf dem zylindrischen Körper (132) gehalten wird, die sich an der Innenseite des kreisförmigen Hohlraums (142) befindet, und verhindert, dass sich die Hülse von der Rohrkonstruktion oder vom Fahrgestell des Fahrzeugs löst.

15. Eine Diebstahlsicherungsvorrichtung gemäß Anspruch 1, **dadurch gekennzeichnet, dass** der Befestigungspunkt die Hülse (143) umfasst, die den Kopf (144) und den zylindrischen Körper (145) der Hülse (143) aufweist, wobei an der Hülse (143) und auf ihrer Seite der Stutzen (105) befestigt wird, wobei der zylindrische Körper (145) der Hülse (143) seitlich eine Öffnung (146) zum Befestigen des Stutzens (105) aufweist.

16. Eine Diebstahlsicherungsvorrichtung gemäß Anspruch 1, **dadurch gekennzeichnet, dass** der Befestigungspunkt die Hülse (147) umfasst, die einen derartig bearbeiteten zylindrischen Körper (148) aufweist, dass ihre Oberseite (151) einen Hohlraum (167) aufweist, in den ein Kopf (149) montiert wird, der in den Hohlraum (150) am Körper (148) der Hülse (147) passt, wobei die Hülse (147) und ihr Körper (148) mit geeigneten Mitteln an der Unterseite (153) des Fahrzeugs fixiert ist, wozu sich an dieser Basis (153) eine Rippe (168) befindet.

17. Eine Diebstahlsicherungsvorrichtung gemäß Anspruch 16, **dadurch gekennzeichnet, dass** der Kopf (149) im Hohlraum (150) auf der Innenseite des Körpers (148) fixiert wird, wozu sich darin eine Ringnut (152) befindet, in die die Rippe mit ringförmigem Umfang (154) auf Druck eingepresst wird, wobei das Einsetzen des Kopfs (149) in den Hohlraum (150) durch die Flanke (155) geführt wird.

18. Eine Diebstahlsicherungsvorrichtung gemäß Anspruch 16, **dadurch gekennzeichnet, dass** in die Innenseite des Kopfs die Nuten (157) gearbeitet sind, wodurch wenn jemand versucht, den Befestigungspunkt zu brechen und ein Ende der Kette (156) zu trennen, der erforderliche Kraftaufwand dazu sehr viel größer ist, und die Möglichkeit zum Drehen der Kette und ihres ringförmigen Abschlussstücks (171), um sie vom Kopf (156) und den Nuten (157) zu lösen, wird mit einer Dichtung (158) verhindert, wobei eine einzelne Welle (159), die Teil der Dichtung (158) ist, und durch den Kanal (173) gleitet, und die Raste (160) arretiert, die ein Teil der vorhandenen ringförmigen Körper (161) am Ende der Kette ist.

19. Eine Diebstahlsicherungsvorrichtung gemäß Anspruch 16, **dadurch gekennzeichnet, dass** der Kopf auf seiner Seite einen Stutzen (164) und das Schloss (165) aufweist, das mittels der Öse (166) entlang des Kanals (167) gleitet, um die Raste (160) der ringförmigen Körper (161), die in die Nuten (157) im Kopf (163) greift, zu arretieren.

20. Eine Diebstahlsicherungsvorrichtung gemäß Anspruch 1, **dadurch gekennzeichnet, dass** der Befestigungspunkt die Hülse umfasst, in die ein Kopf (168) passt, der eine Halterung (169) aufweist, worin sich eine Halterung (169) befindet, weil die Innenseite des Körpers des Kopfs (168) einen Hohlraum mit ringförmigen Auskehlungen (173-174) aufweist.

21. Eine Diebstahlsicherungsvorrichtung gemäß Anspruch 20, **dadurch gekennzeichnet, dass** die Halterung (169) einen zylindrischen Körper aufweist, dessen Oberseite mit einer Raste (170) verlängert wird, und dass sich an der Innenseite des Körpers ringförmige Rippen (171-172) befinden.

22. Eine Diebstahlsicherungsvorrichtung gemäß Anspruch 20, **dadurch gekennzeichnet, dass** der Kopf (168) auf seiner Seite ein Schloss (175) und eine Stutzen (105) aufweist, wobei sich die Halterung (169) durch eine Welle (176) dieses Schlosses bewegt, (165) die rechts und links des Kanals (177) gleitet.

23. Eine Diebstahlsicherungsvorrichtung gemäß Anspruch 20, **dadurch gekennzeichnet, dass** der Körper des Kopfs (163) eine Öffnung (178) aufweist, in die eine Welle (180) eingesetzt wird, die von einer Feder (181) umgeben ist, wobei das obere Ende der Welle (180) an dem von einem Mantel (182) umgebenen Kabel (179) verbunden ist.

## Revendications

1. Un agencement de dispositif antivol comprenant un véhicule ayant un cadre et un guidon, ledit guidon étant adapté pour être attaché à un point fixe sur le châssis du véhicule par des moyens mécaniques (23, 27) comprenant un borne et une chaîne conventionnelle à maillons, ledit points fixe comprend un boulon fileté (30) inséré dans le tube du cadre du véhicule à travers un trou et fixé au cadre par une soudure, ledit boulon fileté saillant du cadre, **caractérisé en ce que** lesdits moyens mécaniques comprennent également une borne (23), dont l'une des extrémités est introduite dans ledit écrou fileté (30), ladite borne (23) incorpore sur son latéral un embout (26), ledit embout (26) étant adapté pour être relié à une seconde borne (24), cette seconde borne (24) étant adaptée pour recevoir une extrémité (79) de la borne d'une chaîne (19).

2. Un agencement de dispositif antivol conformément à la revendication 1, **caractérisé en ce que** lesdits moyens mécaniques comprennent une borne (57) de préférence cylindrique, dont la partie inférieure a un goujon (78) dans lequel un boulon est introduit (28) soudé à une plaque (36), et ladite plaque (36) est soudée à un tube (20) du cadre, qui fait partie d'une structure tubulaire (13), formant un point fixe, l'intérieur de la borne (57) ayant une cavité (79) adaptée pour recevoir une bague ou un pivot de fixation (58), ledit pivot de fixation (58) étant fixé par des moyens connus à l'extrémité d'une chaîne conventionnelle (17) à maillons (27) des moyens mécaniques.

3. Un agencement de dispositif antivol conformément à la revendication 2, **caractérisé en ce que** sur le côté de la borne (57) se trouve un pivot de fixation (34), adapté pour recevoir une extrémité d'une chaîne (19).

4. Un agencement de dispositif antivol conformément à la revendication 1, **caractérisé en ce que** lesdits moyens mécaniques comprennent une structure tubulaire (60) formée par une partie sur la droite (45) d'une forme cylindrique verticale ouverte sur l'une de ses extrémités, la partie supérieure fermée, et une partie à gauche (45) également horizontalement cylindrique, la partie de droite (46) incorpore une borne d'ancrage (49), adaptée pour recevoir une extrémité d'une seconde chaîne.

5. Un agencement de dispositif antivol conformément à la revendication 4, **caractérisé en ce que** la structure tubulaire (60) comprend une cavité (82) adaptée pour recevoir la borne d'ancrage (49) laquelle sur l'une de ses extrémités est introduite dans le goujon (30), ladite borne d'ancrage (49) est immobilisée dans la partie de droite (46) de la structure tubulaire (60) par un circlip (42) qui est placé en position d'immobilisation dans une rainure (51) dans la cavité (82).

6. Un agencement de dispositif antivol conformément à la revendication 1, **caractérisé en ce que** lesdits moyens mécaniques comprennent également une borne (56), adaptée pour recevoir l'une des extrémités de la chaîne (52) et fixant à ladite borne (56) une bague secondaire (71) qui est incorporée à une bague principale (70), incorporant une rainure (55) entre (70-71), de sorte que la bague (71) puisse tourner par rapport à la bague principale (70), la bague secondaire (71) étant logée dans la bague principale (70) par l'encastrement (83) sur la partie supérieure de la bague principale (70).

7. Un agencement de dispositif antivol conformément à la revendication 1, **caractérisé en ce que** lesdits moyens mécaniques comprennent également une borne (56), adaptée pour recevoir sur l'une de ses extrémités la chaîne (52), et ladite borne étant fixée à la plaque (66) par une broche, ladite plaque étant adaptée pour être logée dans la partie supérieure (87) d'une bague (86), un boulon fileté (68) sur lequel le capuchon de protection (67) est inséré unissant la bague (86) au tube du cadre (20) avec le goujon (30), dont la partie supérieure (30) est fixée à (20) par une soudure (29), et par la partie supérieure, le boulon fileté (30) est vissé dans la partie inférieure (8) de la bague (86).

8. Un agencement de dispositif antivol conformément à la revendication 1, **caractérisé en ce que** le boulon fileté (30) est soudé par l'une des extrémités au tube du cadre (20), l'autre extrémité étant vissée dans la cavité (91) de la partie inférieure (92) d'une bague (94), alors que la partie supérieure (93) est unie à une borne (56) au moyen d'une patte (95) et d'une broche (96), de sorte que la borne (56) est adaptée pour recevoir une extrémité de la chaîne (52), les parties (92-93) de la bague (94) étant unies avec le boulon fileté (97).

9. Un agencement de dispositif antivol conformément à la revendication 1, **caractérisé en ce que** le point fixe comprend une bague (100) qui a un corps cylindrique (101) avec une extrémité supérieure et inférieure plate (102-103) et avec un orifice central (104) adapté pour être fixé à la structure tubulaire ou au châssis du véhicule par son extrémité inférieure, où le support (111) permet le montage de la correspondante chaîne à maillons dans le trou (113), unissant le point fixe à travers la bague (100) à celle-ci ; et où la partie latérale du corps cylindrique (101) comprend également des trous (119-141) opposés l'un à l'autre, pour placer un embout (105) et un verrouillage à bouton (116).

10. Un agencement de dispositif antivol conformément à la revendication 9, **caractérisé en ce que** le support (111) comprend une tête plate (112) où le trou mentionné (113) est placé, s'étendant vers le bas (112) avec une extension (114) d'un périmètre circulaire qui continue avec un filetage spécial à plusieurs diamètres (115) qui se loge dans la cavité (121) à l'intérieur du corps cylindrique (101) de la bague (100).

11. Un agencement de dispositif antivol conformément à la revendication 9, **caractérisé en ce que** l'embout (105) a une tête (106) avec une cavité (107) conçue pour une clé à six pans creux ou similaire à introduire dans le corps de la bague (100), cette tête (106) s'étendant dans un resserrement (108) qui s'étend vers une partie cylindrique (109) et une zone de cône tronqué (110) qui à son tour s'étend vers une autre section de cône tronqué (121) qui se loge dans le trou (119) du corps (101).

12. Un agencement de dispositif antivol conformément à la revendication 1, **caractérisé en ce que** le point fixe comprend la bague (130) qui inclut une tête (131) et un corps cylindrique (132) qui a sur sa base supérieure une cavité (126), dans laquelle la portion cylindrique (122) de la tête (131) se loge, et dans la partie inférieure (127) se trouve une projection (128).

13. Un agencement de dispositif antivol conformément à la revendication 12, **caractérisé en ce que** la tête (131) est conçue pour avoir une cavité intérieure (133) usinée avec une rainure circulaire (134), (134) ayant un encastrement (135), la rainure (134) à son tour s'étend à l'intérieur et vers le bas dans des cavités cylindriques de différents diamètres et longueurs (136-139), et à l'extérieur elles s'étendent vers le bas dans des portions cylindriques (122-123-124), et entre les portions (123-124) se trouve une cavité circulaire (169) pour loger le joint ou l'anneau (125), la tête (131) s'achevant dans une portion conique tronquée 170) de faible hauteur.

14. Un agencement de dispositif antivol conformément à la revendication 12, **caractérisé en ce que** la bague (130) est unie à la structure tubulaire d'un véhicule à deux roues ou plus (non décrit sur les dessins) avec une vis (140) qui pénètre dans la cavité intérieure (139) comme le montre la figure 6, et la tête (131) est retenue sur le corps cylindrique (132) à l'aide d'un joint (125), qui se répand à l'intérieur de la cavité circulaire (142), empêchant la bague de se détacher de la structure tubulaire ou du châssis du véhicule.

15. Un agencement de dispositif antivol conformément à la revendication 1, **caractérisé en ce que** le point fixe comprend la bague (143) qui inclut la tête (144) et le corps cylindrique (145) de ladite bague (143), se logeant dans la dernière (143) et sur son latéral l'embout (105), où le corps cylindrique (145) de la bague (143) a un trou (146) sur son côté, pour loger l'embout (105).

16. Un agencement de dispositif antivol conformément à la revendication 1, **caractérisé en ce que** le point fixe comprend la bague (147) qui inclut un corps cylindrique (148) usiné de sorte que sur sa partie supérieure, l'extrémité (151) a une cavité (167) dans laquelle une tête (149) est logée, qui se loge dans la cavité (150) du corps (148) de la bague (147), où la bague (147) et son corps (148) sont immobilisés sur la structure tubulaire du véhicule par l'extrémité inférieure (153) en employant les moyens appropriés, une strie (168) étant réalisée sur cette base (153).

17. Un agencement de dispositif antivol conformément à la revendication 16, **caractérisé en ce que** la tête (149) est immobilisée dans la cavité (150) conçue à l'intérieur du corps (148), où est réalisée une rainure circulaire intérieure (152), dans laquelle la strie du périmètre circulaire (154) est logée à pression, guidant l'entrée de la tête (149) dans la cavité (150) par l'inclinaison (155).

18. Un agencement de dispositif antivol conformément à la revendication 16, **caractérisé en ce que** la tête a deux rainures (157) usinés à l'intérieur, par conséquent, si quelqu'un essaie de briser le point fixe, et tire l'une des extrémités de la chaîne de tête (156), la force nécessaire pour ce faire est bien plus grande, et la possibilité de tourner la chaîne et son extrémité du corps annulaire (171) pour la libérer de la tête (156) et des rainures (157) est également empêchée par un joint (158), de sorte qu'une seule tige (159) qui est une partie dudit joint (158) et qui coulisse à travers le passage (173) verrouillant l'onglet (160) qui fait partie des corps annulaires (161) est présente à l'extrémité de la chaîne.

19. Un agencement de dispositif antivol conformément à la revendication 16, **caractérisé en ce que** la tête comprend sur son latéral un embout (164) et le verrouillage (165) qui au moyen de la patte (166) coulisse le long du passage (167) pour verrouiller l'onglet (160) des corps annulaires (161) qui se logent dans les rainures (157) à l'intérieur de la tête (163).

20. Un agencement de dispositif antivol conformément à la revendication 1, **caractérisé en ce que** le point fixe comprend la bague dans laquelle une tête se loge (168) comprenant un support (169) à l'intérieur duquel se trouve un support (169), car l'intérieur du corps de la tête (168) a une cavité avec un encastrement annulaire (173-174).

21. Un agencement de dispositif antivol conformément à la revendication 20, **caractérisé en ce que** le support (169) a un corps cylindrique, dont la partie supérieure s'élargit avec un onglet (170) et sur la surface latérale du corps se trouvent des nervures annulaires (171-172).

22. Un agencement de dispositif antivol conformément à la revendication 20, **caractérisé en ce que** sur la tête (168), et sur son latéral, se trouve un verrouillage (175) et un embout (105), le support (169) se déplaçant à travers une tige (176) de ce verrouillage (165) qui coulisse vers la droite et vers la gauche du passage (177).

23. Un agencement de dispositif antivol conformément à la revendication 20, **caractérisé en ce que** le corps de la tête (163) incorpore un trou (178) dans lequel une tige est logée (180) autour, par un ressort (181) unissant l'extrémité supérieure de la tige (180) au câble (179) entouré par une gaine (182).
